# EUROPÄISCHE PATENTSCHRIFT

(11) **EP 0 797 026 B1**
(45) Veröffentlichungstag und Bekanntmachung des Hinweises auf die Patenterteilung: **30.05.2001**
(21) Anmeldenummer: 97104664.4
(22) Anmeldetag: 19.03.1997
(51) Int. Cl.: F16H 15/02, A01D 34/74

(54) **Reibradantrieb**
Friction wheel drive
Entraînement par friction de roues

(30) Priorität: 22.03.1996 US 621278
(43) Veröffentlichungstag der Anmeldung: 24.09.1997
(73) Patentinhaber: DEERE & COMPANY, Moline, Illinois 61265-8098 (US)
(72) Erfinder: Seegert, Brian David, Hartford, Wisconsin 53027 (US); Henning, Royal Aaron, Hartford, Wisconsin 53027 (US); Sebben, Daniel Angelo, West Bend, Wisconsin 53095 (US); Zellmer, Timothy Paul, Horicon, Wisconsin 53032 (US); Cameron, William Garrald, Juneau, Wisconsin 53039 (US); Hutchison, Wayne Robert, Mayville, Wisconsin 53050 (US)
(74) Vertreter: Feldmann, Bernhard

(56) Entgegenhaltungen:
- EP-A- 0 475 021
- AU-B- 573 971
- DE-C- 517 030
- US-A- 751 878
- US-A- 807 176
- US-A- 3 396 519
- US-A- 3 481 213
- US-A- 4 271 378
- US-A- 5 390 479

## Beschreibung

Die Erfindung bezieht sich auf einen Reibradantrieb nach dem Oberbegriff von Anspruch 1 oder 2.

Reibradantriebe oder Reibradgetriebe sind kostengünstig herstellbare Übertragungselemente und bestehen in der Regel aus Reibrädern oder Reibscheiben mit glatten Umlaufflächen, die so gegeneinander gepresst werden, dass durch die entstehende Reibung Kräfte oder Drehmomente übertragen werden. Ein Anwendungsfall sind handgeführte Schneeräumgeräte (John Deere Publikation von August 1994 mit dem Titel: John Deere Snow Removal Equipment). Bei diesen Geräten ist auf einer horizontalen Welle ein Reibrad angeordnet, das wahlweise gegen eine Reibscheibe zur Anlage gebracht wird, die von der Ausgangswelle eines Motors aus angetrieben wird. Das Reibrad dreht mit der Scheibe und dient zum Antrieb von Laufrädern über Ketten und Kettenräder. Das Reibrad kann eine Neutralstellung einnehmen, in der es von der Bedienungsperson so zu verstellen ist, dass kein Kontakt mit der Scheibe mehr besteht. Für eine Vorwärtsfahrt verstellt die Bedienungsperson das Reibrad derart, dass es auf einer Seite der Reibscheibe läuft, während es für eine Rückwärtsfahrt so verstellt werden muss, dass es auf der anderen Seite der Reibscheibe läuft. Bei diesem bekannten Reibradantrieb kann die Drehrichtung des Reibrades also bereits umgekehrt werden. Allerdings sind hierzu größere Stellwege mit dem zugehörigen Gestänge erforderlich.

Die AU-B-573971 zeigt einen Rasentraktor mit einem umkehrbaren Getriebe. Das Getriebe weist eine Eingangswelle auf, in deren Endbereichen jeweils ein Reibrad angebracht ist. Die Reibräder können mit einer Reibscheibe derart zusammenwirken, daß antreibbare Räder des Rasentraktors, in Abhängigkeit davon mit welchem der Reibräder die Reibscheibe zusammenwirkt, in Vorwärts- bzw. Rückwärtsrichtung angetrieben werden.

Die mit der Erfindung zu lösende Aufgabe wird darin gesehen, einen Reibradantrieb vorzusehen, der einfach ausgeführt ist und weniger Einzelteile aufweist. Die Aufgabe sieht in einem Aspekt vor, dass die Stellwege zur Richtungsumkehr relativ klein gehalten werden. Die Erfindung sieht deshalb vor, dass auf der antreibbaren Welle mit Abstand zur ersten Reibscheibe eine zweite Reibscheibe vorgesehen ist und dass das Reibrad zwischen drei Stellungen derart verschwenkbar ist, dass das Reibrad in der ersten Stellung gegen die erste Reibscheibe anliegt und in einer ersten Drehrichtung antreibbar ist, dass das Reibrad in der zweiten Stellung gegen die zweite Reibscheibe anliegt und in einer zweiten der ersten Drehrichtung entgegengesetzten Drehrichtung antreibbar ist und dass das Reibrad in der dritten Stellung zu der ersten und zweiten Reibscheibe Abstand aufweist und nicht antreibbar ist. Alternativ sieht die Erfindung vor, dass auf dem Abtriebsteil mit Abstand zu der ersten Reibscheibe eine zweite Reibscheibe vorgesehen ist und dass das Reibrad zwischen drei Stellungen derart verschwenkbar bzw. der Abtriebsteil derart verstellbar ist, dass die erste Reibscheibe in der ersten Stellung gegen das Reibrad anliegt und in einer ersten Drehrichtung antreibbar ist, dass die zweite Reibscheibe in der zweiten Stellung gegen das Reibrad anliegt und in einer zweiten der ersten Drehrichtung entgegengesetzten Drehrichtung antreibbar ist und dass die erste und die zweite Reibscheibe in der dritten Stellung zu dem Reibrad einen Abstand aufweisen und nicht antreibbar sind. Diese Alternative ist an sich eine Umkehrung der ersten Lösung. Beide Lösungen haben ein verschwenkbares Reibrad, das einmal getrieben wird und zum anderen auch antreibbar sein kann. Alternativ können auch die Reibscheiben verstellt werden. In allen Fällen sind die Stellwege sehr klein. Derartige Reibradantriebe lassen sich problemlos auch in Fahrzeugen, insbesondere bei Fahrzeugen für die Rasen- und Grundstückspflege einsetzen und dort nicht nur für den Radantrieb. Derartige Geräte sind in der Regel mit antreibbaren Komponenten versehen, die über Riementriebe angetrieben werden, weshalb nach der Erfindung ferner vorgeschlagen wird, dass mindestens eine Reibscheibe als Riemenscheibe ausgebildet ist Andererseits wird insbesondere bei in der Rasen- und Grundstückspflege einsetzbaren Fahrzeugen der Kraftfluß vom Motor zum Getriebe über einen Riementrieb geleitet. Derartige Fahrzeuge haben dann eine mit dem Motor verbundene und meistens vertikal nach unten gerichtete Antriebswelle, auf der eine Riemenscheibe zum Antrieb der Werkzeuge des Gerätes und gegebenenfalls eine Riemenscheibe für die Kraftübertragung zum Getriebe vorgesehen ist. Die Erfindung nutzt nun diese Antriebswelle für den Reibradantrieb, da nach der Erfindung ferner vorgeschlagen wird, dass die antreibbare Welle zum Antrieb der Treibräder eines Fahrzeuges und zum Antrieb der Werkzeuge des Gerätes dient, wobei das Gerät an das Fahrzeug höhenverstellbar angeschlossen ist. Die zusätzlich für den Reibradantrieb erforderlichen Teile bestehen damit lediglich aus dem Reibrad mit seiner Welle, da die Riemenscheiben je nach ihrem Außendurchmesser auch als Reibscheibe dienen. Das Reibrad ist dann zwischen den beiden Riemenscheiben vorzusehen und braucht nur nach oben oder nach unten geschwenkt zu werden, um in unterschiedlichen Drehrichtungen angetrieben werden zu können. Befindet sich das Reibrad dann in einer Zwischenstellung, in der es keinen Kontakt mit den Scheiben hat, so ist sein Antrieb unterbrochen.

Bei einem Einsatz in Fahrzeugen wird als Kraftquelle ein auf einem Fahrzeug vorgesehener Verbrennungsmotor empfohlen.

Nach der Erfindung wird aber bevorzugt, dass der Reibradantrieb als Hubvorrichtung eingesetzt wird, weshalb der Abtriebsteil des Reibradantriebes an eine Hubvorrichtung zum Anheben und Absenken eines Gerätes in Abhängigkeit von der Drehrichtung des Reibradantriebes angeschlossen ist. Auf diese Weise wird das Gerät beispielsweise ausgehoben, wenn sich der Abtriebsteil in einer Drehrichtung dreht und abgesenkt, wenn sich der Abtriebsteil in der entgegengesetzten Richtung dreht. Sobald aber der Abtriebsteil sich nicht mehr dreht, also zum Stillstand gekommen ist, ist die Hubbewegung unterbrochen bzw. das Anheben oder Absenken beendet. Damit kann auf Hydraulikzylinder oder aufwendige Gestängevorrichtungen, die bisher zum Anheben und Absenken eines Arbeitsgerätes vielfach eingesetzt wurden, verzichtet werden. Auch braucht zur Höheneinstellung des Gerätes keine Muskelkraft eingesetzt zu werden.

Zum Anheben und Absenken des Gerätes kann der Abtriebsteil wie eine Winde arbeiten. Bevorzugt wird jedoch, dass der Abtriebsteil mit einem Schiebeteil zusammenwirkt, der die Drehbewegung des Abtriebsteils in eine in Richtung der Längsachse des Abtriebsteils verlaufende Schiebebewegung umwandelt und bei seiner Verstellung ein Hubgestänge zumindest zum Anheben des Gerätes betätigt Hierzu wird vorgeschlagen, dass der Abtriebsteil als eine mit dem Reibrad verbundene Gewindestange ausgebildet ist und dass der Schiebeteil auf dem Gewinde der Gewindestange undrehbar geführt ist, wobei die Gewindestange zusammen mit dem Reibrad schwenkbar gelagert ist und der Schiebeteil mit einem Schwenkhebel zusammenwirkt, der mit dem Hubgestänge verbunden ist, wobei die Gewindestange und der Schwenkhebel in einem ortsfesten Stützträger vertikal schwenkbar gelagert sind, der mindestens eine Nockenfläche zum automatischen Rückführen des Reibrades in seine Neutralstellung aufweist Auf diese Weise sind Reibrad, Gewindestange und Schwenkhebel an dem vorzugsweise am Fahrzeug angebrachten Stützträger schwenkbar gelagert, wobei das Reibrad und die Gewindestange in einer Tragkonsole angeordnet sein können, die dann in dem Stützträger schwenkbar ist Die Tragkonsole kann dabei so gestaltet sein, dass sie verhindert, dass sich der Schiebeteil mitdreht, wenn sich die Gewindestange dreht. Zweckmäßig ist der Schiebeteil auch nicht mit dem Schwenkhebel verbunden, sondern liegt bei einem Anheben nur gegen diesen an, so dass das Hubgestänge an den Schwenkbewegungen des Reibrads und der Gewindestange nicht teilnimmt.

In einem besonders bevorzugten Anwendungsfall sieht die Erfindung schließlich vor, dass der Reibradantrieb zum Höhenverstellen eines an einem Rasentraktor angeschlossenen Mähwerks dient, wobei die antreibbare Welle des Reibradantriebs zum Antrieb zumindest der Messer oder des Messers des Mähwerkes dient und wobei das Reibrad vom Fahrerstand aus manuell verstellbar ist. Hierdurch wird der sowieso vorhandene Mähmesserantrieb noch zum Höhenverstellen des Mähwerks ausgenutzt. Von der das Mähwerk antreibenden Welle kann außerdem noch der Fahrantrieb abgeleitet werden. Die einzige Muskelkraft, die zum Verstellen des Mähwerks nötig ist, ist diejenige die zum Verstellen des Reibrades aufgewendet werden muss. Diese ist gering, kann aber etwas größer sein, wenn das Reibrad gegen die Wirkung einer Feder verstellt wird, damit das Reibrad unter Federwirkung in seine dritte oder Neutralstellung zurückkehrt.

In der Zeichnung ist ein nachfolgend näher erläutertes Ausführungsbeispiel der Erfindung dargestellt. Es zeigt:
- Fig.1: einen Rasentraktor mit einem höhenverstellbaren Mähwerk,
- Fig.2: die Hubvorrichtung für das Mähwerk in perspektivischer Darstellung und ohne Rasentraktor,
- Fig. 3: einen Reibradantrieb mit einem sich in der Neutralstellung befindlichem Reibrad,
- Fig. 4: eine Einzelheit einer Schnitthöheneinstellvorrichtung,
- Fig. 5: den Reibradantrieb nach Fig. 3 in einer Stellung zum Absenken des Mähwerkes,
- Fig. 6: den Reibradantrieb in schematischer Darstellung in seiner Stellung zum Anheben des Mähwerkes mit Drehrichtung und Schieberichtung,
- Fig. 7: eine ähnliche Darstellung wie in Fig. 6, wobei der Reibradantrieb in seiner Stellung zum Senken des Mähwerkes gezeigt ist und
- Fig. 8: die Lagerung des Reibrades in perspektivischer Darstellung.

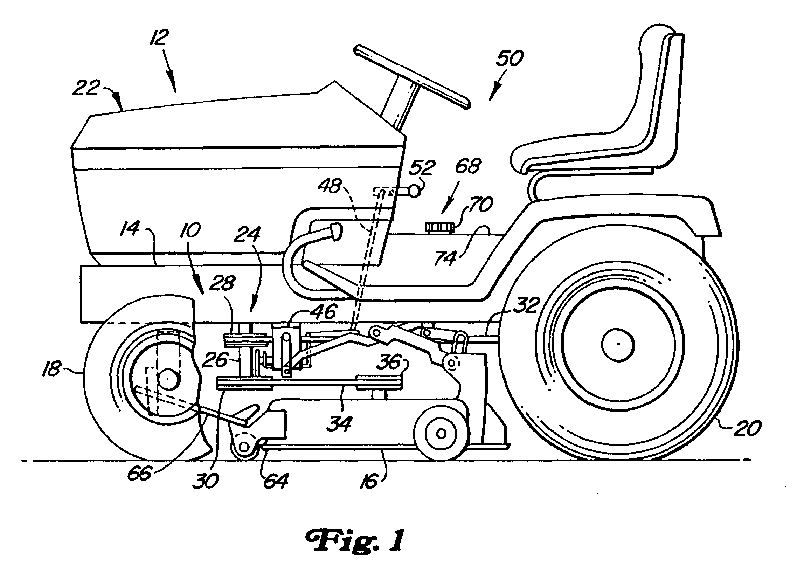

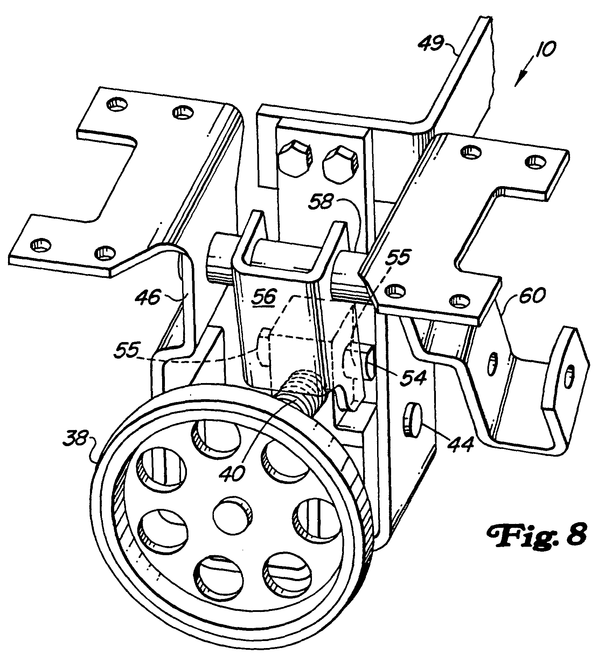

In den Fig. 1 bis 8 der Zeichnung ist eine Hubvorrichtung 10 für ein bevorzugtes Ausführungsbeispiel dargestellt. Im einzelnen ist die Hubvorrichtung 10 für einen an einen Rasentraktor 12 anschließbaren Mäher konzipiert. Der Rasentraktor 12 ist aus Fig. 1 erkennbar und mit einem Rahmen 14 versehen, an den das Mähwerksgehäuse 16 des Mähers anschließbar ist. Das Mähwerksgehäuse 16 befindet sich unterhalb des Rahmens 14 zwischen den beiden lenkbaren Vorderrädern 18 und den beiden antreibbaren Hinterrädern 20. In üblicher Weise ist das Fahrzeug 12 mit einer Antriebsquelle oder einem Verbrennungsmotor 22 ausgestattet, die oder der zum Antrieb der Hinterräder 20, des oder der Messer des Mähwerksgehäuses 16 und weiterer Komponenten oder Geräten eine Ausgangswelle aufweist.

An diese Ausgangswelle des Motors 22 ist, wie aus den Fig. 1, 2, 3, 5, und 7 hervorgeht, eine Hochscheibe 24 angeschlossen. Die Hochscheibe 24 besteht aus einer Zentralwelle 26 und aus zwei daran drehfest angeschlossenen und zueinander einen Vertikalabstand aufweisenden Planscheiben oder Riemenscheiben 28 und 30. Um die erste Riemenscheibe 28 ist ein Antriebsriemen 32 geführt, der sich rückwärtig bis zu dem nicht gezeigten Fahrzeuggetriebe erstreckt und letztlich zum Antrieb der beiden Hinterräder 20 dient. Um die zweite und untere Riemenscheibe 30 ist ein Riemen 34 geführt, der zum Antrieb der Mähmesser des Mähwerksgehäuses dient, weshalb auf dem Mähwerksgehäuse 16 entsprechende Riemenscheiben 36 vorgesehen sind.

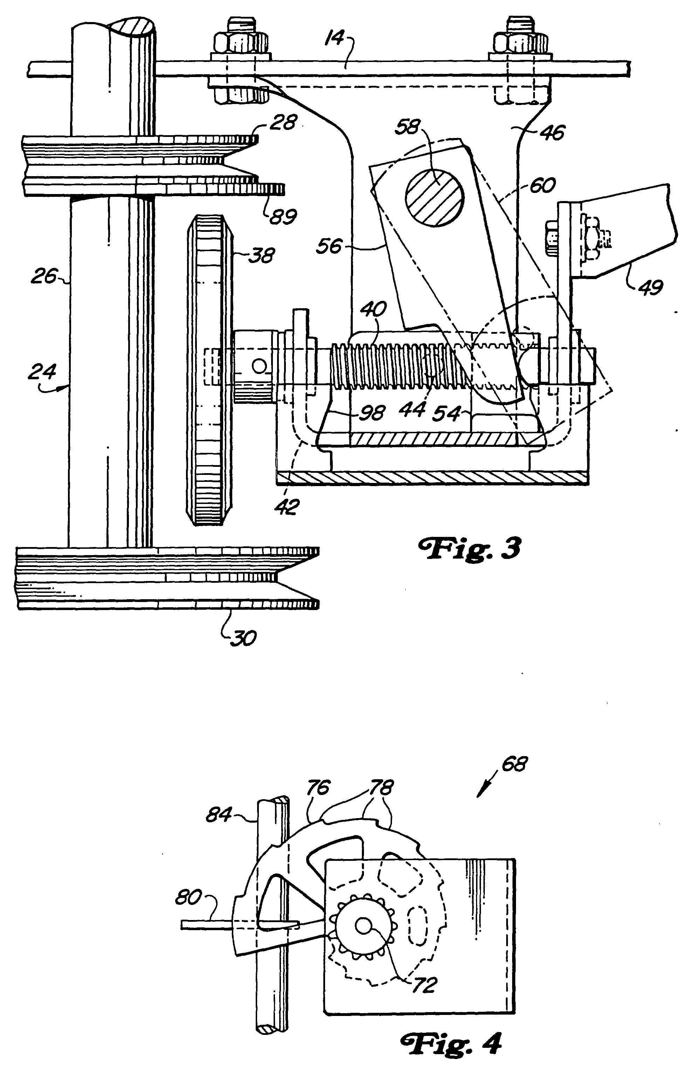

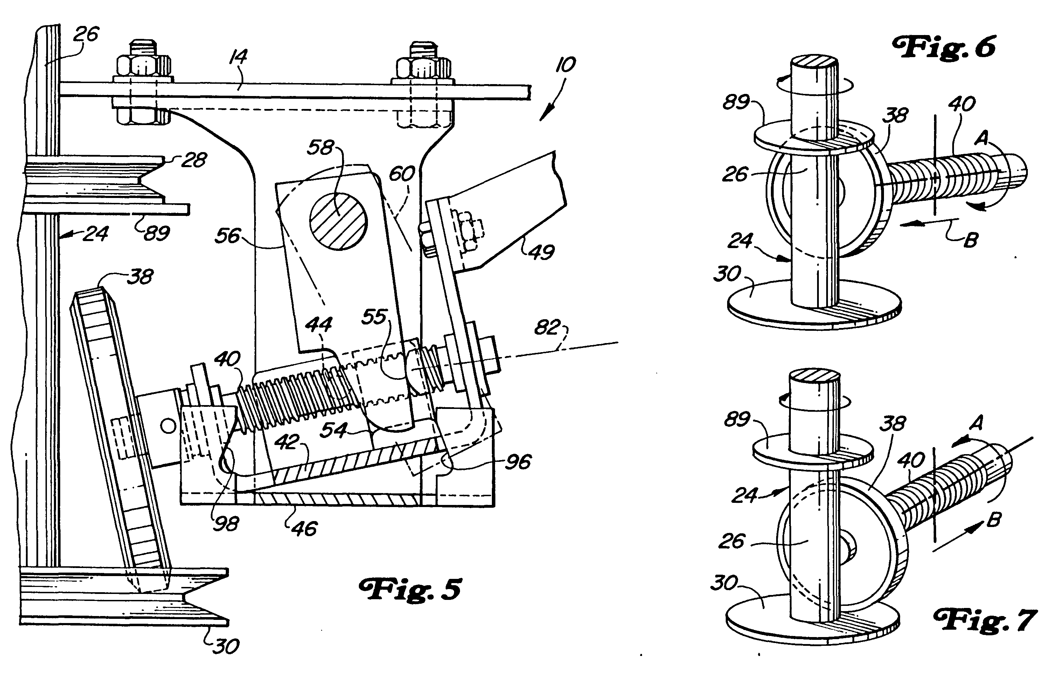

Während des Einsatzes kann das Mähwerk über die Hubvorrichtung 10 wahlweise angehoben oder abgesenkt werden. Hierzu ist die Hubvorrichtung zunächst mit einem Reibrad 38 ausgestattet, das zwischen der oberen und der unteren Riemenscheibe 28 und 30 vorgesehen ist und aus seiner in Fig. 3 gezeigten Neutralstellung in eine Stellung nach Fig. 6 oder 7 verstellbar ist, so dass ein Reibradgetriebe mit Richtungswechsel entsteht. An das Reibrad 38 ist ein in Umlauf versetzbarer Ausgangsteil drehfest angeschlossen, der bei dem bevorzugten Ausführungsbeispiel als Gewindestange 40 ausgebildet ist. Und damit das Reibrad 38 zwischen seinen Stellungen verschwenkt werden kann, ist die Gewindestange 40 in einer verschwenkbaren Tragkonsole 42 drehbar gelagert. Die Tragkonsole 42 ist in einem Stützträger 46 verschwenkbar, der U-förmig ausgebildet sein kann und dann mit seinen Schenkelenden mit dem Fahrzeugrahmen verschraubt ist. Die Tragkonsole 42 ist dann über einen horizontal angeordneten Stift 44 zwischen den Schenkeln des Stützträgers 46 vertikal schwenkbar gelagert. Die Tragkonsole 42 wird vom Fahrerstand aus verstellt, weshalb die Tragkonsole 42 mit einem nach rückwärts gerichteten Steuerarm 49 fest verbunden beispielsweise verschraubt ist, an dem ein zum Bedienungs- oder Fahrerstand 50 führender Stellhebel 48 angelenkt ist. Dieser wiederum greift mit seinem anderen Ende an einem am Fahrerstand vorgesehenen und im Fahrzeugrahmen 14 gelagerten Handhebel 52 an, so dass, wenn der Handhebel von der Bedienungsperson nach oben verstellt wird, das Mähwerk angehoben wird. Bei einer Verstellung des Handhebels nach unten wird das Mähwerk abgesenkt. Auf der Gewindestange 40 ist ein mit Innengewinde versehener Schiebeteil 54 verstellbar, wenn die Gewindestange sich dreht. Der Schiebeteil 54 ist darüber hinaus noch mit seitlich abstehenden Vorsprüngen bzw. Abschnitten 55 versehen, die das Verbindungsgestänge zum Höhenverstellen des Mähers verstellen, wenn der Teil 54 sich auf der Spindel 40 verstellt. Im einzelenen gehört zu diesem Gestänge ein U-förmig ausgebildeter Hebel 56, dessen Schenkel an ihrem unteren Ende gegen die Vorsprünge 54 anliegen und mit ihren oberen Enden auf einer Querwelle 58 drehfest aufsitzen, die ihrerseits in den Schenkeln des Stützträgers 46 gelagert ist. Auf der Querwelle 58 sitzt außerdem noch ein Ausleger 60 drehfest auf, dessen anderes Ende über ein Gestänge 62 an dem Mähwerksgehäuse 16 angreift. Wenn nun der Hebel 56 nach vorne oder nach rückwärts verstellt wird, dann wird das Mähwerksgehäuse nach oben oder nach unten verstellt. Das Gestänge 62 greift an den rückwärtigen Teil des Mähwerksgehäuses an, dessen vorderer Abschnitt 64 an einer Tragstütze 66 aufgehängt ist, die schwenkbar an das Fahrzeug angeschlossen ist. Die Tragstütze trägt damit den vorderen Abschnitt des Mähwerksgehäuses, auch wenn dieses auf- und abbewegt wird.

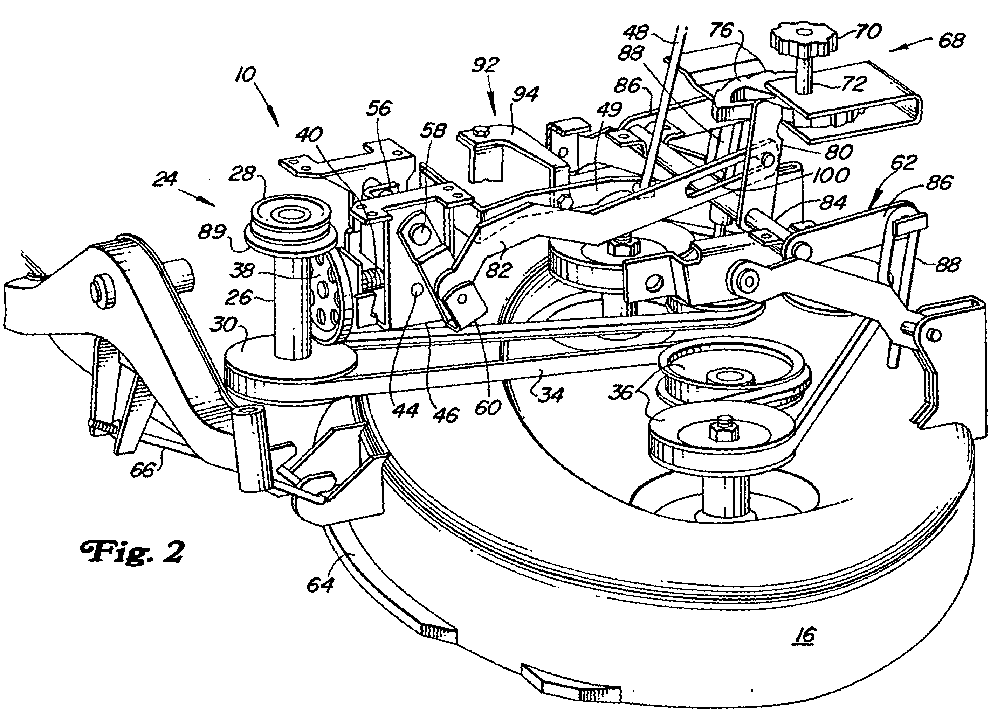

Das bevorzugte Ausführungsbeispiel ist außerdem noch mit einer Schnitthöheneinstellvorrichtung 68 ausgestattet. Diese wird über einen Einstellknopf 70 betätigt, der in den Fig. 1 und 2 erkennbar ist, auf dem Fahrerstand 50 vorgesehen ist und auf einer Welle 72 aufsitzt, die sich durch den Boden 74 des Fahrerstandes bis in diesen erstreckt. Das andere Ende der Welle 72 ist an einem Stufenrad 76 (siehe Fig. 2 und 4) angeschlossen, dessen einzelne Stufen mit 78 bezeichnet sind. Gegen die einzelnen Stufen 78, die den einzelnen einstellbaren Schnitthöhen zugeordnet sind, kommt ein Höheneinstellhebel 80, der über eine Strebe 82 an dem Ausleger 60 angeschlossen ist, zur Anlage und bestimmt dadurch die Schnitthöhe. Der Höheneinstellhebel 80 ist an dem Hubgestänge 62 angeschlossen und verschwenkt um seine Anschlussstelle in Form einer Welle 84, wenn das Mähwerksgehäuse angehoben oder abgesenkt wird.

Um nun das Mähwerksgehäuse 16 absenken zu können, drückt die Bedienungsperson den Handhebel 52 nach unten, wodurch der Steuerhebel 48 nach oben gezogen wird, weil das vordere Ende des Handhebels 52 dabei nach oben verschwenkt. Hierdurch wiederum werden der Steuerarm 49, die Tragkonsole 42 und das Reibrad 38 in die in Fig. 5 gezeigte Stellung verstellt. In dieser Stellung ist das Reibrad gegen die untere Riemenscheibe 30 gepresst, so dass bei deren Umlauf das Reibrad 38 und die daran fest angeschlossene Spindel 40 in Richtung des Pfeiles A in Fig. 7 umlaufen. Gleichzeitig verstellt sich dann der Schiebeteil 54 in Richtung des Pfeiles B in Fig. 7, also nach rückwärts und von dem Reibrad fort. Dadurch wiederum können sich der Hebel 56 und der Ausleger 60 mit Bezug auf Fig. 5 entgegen dem Uhrzeigersinn verstellen, wodurch letztlich das Hubgestänge 62 derart verstellt wird, dass sich das Mähwerk auf Grund seines Eigengewichtes absenkt. Bei diesem Vorgang verstellt sich außerdem die Strebe 82 nach rückwärts und der Höheneinstellhebel 80 dreht sich zusammen mit der Welle 84 im Uhrzeigersinn mit Bezug auf Fig. 2. An den Enden der Welle 84 greifen noch Ausleger 86 an, die über Aufhänger 88 an dem Mähwerksgehäuse angeschlossen sind und sich bei einem Drehen der Welle 84 im Uhrzeigersinn ebenfalls im Uhrzeigersinn drehen, wodurch die Aufhänger abgesenkt werden.

Zum Anheben des Mähwerksgehäuses verstellt die Bedienungsperson den Handhebel 52 nach oben, wodurch der Stellhebel 48 nach unten verstellt wird. Hierdurch verstellen sich die Tragkonsole 42 und der Steuerarm 49 aus der Stellung nach Fig. 3 im Uhrzeigersinn und das Reibrad 38 nach oben, bis es gegen eine Reibscheibe 89 zur Anlage kommt, die bei dem bevorzugten Ausführungsbeispiel einen größeren Durchmesser als die obere Riemenscheibe 28 hat, aber direkt unterhalb dieser liegen kann und mit dieser umläuft. Bei umlaufender Reibscheibe 89 drehen sich das Reibrad 38 und seine Spindel 40 in Richtung des Pfeiles A in Fig. 6 und der Schiebeteil 54 verstellt sich in Richtung des Pfeiles B in Fig. 6, also nach vorne und auf das Reibrad 38 zu. Hierdurch werden dann der Hebel 56, die Querwelle 58 und der Ausleger 60 aus ihren Stellungen in Fig. 3 im Uhrzeigersinn verschwenkt. Die Strebe 82 wird aus ihrer Stellung in Fig. 2 nach links oder nach vorne gezogen, wodurch sich Höheneinstellhebel 80, die Welle 84 und die Ausleger entgegen dem Uhrzeigersinn drehen. Die Aufhänger 88 und damit das Mähwerksgehäuse 16 werden nach oben gezogen bzw. verstellt.

In der in Fig. 3 gezeigten Stellung hat das Reibrad weder mit der Reibscheibe 89 noch mit der unteren Riemenscheibe 30 Kontakt. Das Reibrad 38 kann dann nicht umlaufen und das Mähwerksgehäuse 16 kann nich höhenverstellt werden. Diese Stellung wird als Neutralstellung bezeichnet.

Das bevorzugte Ausführungsbeispiel ist aber noch mit einer Vorrichtung 92 versehen, die bewirkt, dass der Steuerarm 49 und die Tragkonsole 42 in ihre Neutralstellung, in der das Reibrad keinen Kontakt mit der Reibscheibe 89 oder mit der unteren Riemenscheibe 30 hat, zurückgeführt werden, wenn die Bedienungsperson den Handhebel 52 loslässt. Das Rückführen wird durch eine metallische Blattfeder 94 bewirkt, die an dem Rahmen 14 und an dem Steuerarm 49 angeschlossen ist.

Auch, wenn das Mähwerksgehäuse 16 seine höchste und seine tiefste Stellung erreicht, wird das Reibrad 38 in seine Neutralstellung nach Fig. 3 zurückgeführt. Bei einem Absenken des Mähwerksgehäuses 16 wird sich der Schiebeteil 54 nach rückwärts in Richtung des Pfeiles B in Fig. 7 verstellen. Wenn sich nun das Mähwerksgehäuse 16 seiner untersten Stellung nähert, dann wird der Schiebeteil 54 gegen eine erste Nockenfläche 96 zur Anlage kommen, die an dem rückwärtigen Ende des Stützträgers 46 vorgesehen ist und bewirkt, dass sich der Schiebeteil nach unten verstellt, wenn er sich weiter nach rückwärts verstellt. Hierdurch wird sich aber die Tragkonsole 42 aus ihrer Stellung in Fig. 5 im Uhrzeigersinn drehen, wobei das Reibrad 38 von der unteren Riemenscheibe 30 fortgeschwenkt wird. Damit verhindert die erste Nockenfläche 96 eine weiter nach unten gerichtete Bewegung des Mähwerks, weil das Reibrad 38 seinen Kontakt mit der unteren Riemenscheibe 30 verliert und in seine Neutralstellung zurückkehrt. Andererseits wird, wenn sich das Mähwerksgehäuse seiner obersten Stellung nähert, der Schiebeteil gegen eine zweite Nockenfläche 98 zur Anlage kommen, die an dem linken oder vorderen Ende des Stützträgers 46 vorgesehen ist. Diese Nockenfläche 98 bewirkt, dass sich der Schiebeteil 54 nach unten verstellt, wodurch das Reibrad 38 seinen Kontakt mit der Reibscheibe 89 verliert und in seine Neutralstellung zurückkehrt. Die Rückstellvorrichtung wird damit immer aktiviert, wenn sich das Mähwerk seiner höchsten oder seiner untersten Stellung nähert.

Die Schnitthöheneinstellvorrichtung 68 des bevorzugten Ausführungsbeispiels ist am besten aus den Fig. 2 und 4 ersichtlich. Wenn sich das Mähwerksgehäuse 16 in seiner obersten Stellung befindet, kann die Bedienungsperson durch Drehen des Knopfes 70 leicht die gewünschte Schnitthöhe einstellen. Danach wird das Mähwerk wieder durch Betätigung des Handhebels 52 abgesenkt. Das Mähwerk senkt sich auf Grund seines Eigengewichtes ab, bis dass der Höheneinstellhebel 80 gegen eine Stufe 78 des Stufenrades 76 zur Anlage kommt. Jede Stufe entspricht einer bestimmten Schnitthöhe, und die Bedienungsperson kann auf diese Weise nach einem Ausheben des Mähwerkes die gewählte Schnitthöhe leicht wieder auffinden.

Aus Fig. 2 ist noch zu erkennen, dass in der Strebe 82 des bevorzugten Ausführungsbeispiels ein Langloch 100 vorgesehen ist, das die Funktion der Nockenfläche 96 gewährleistet, wenn eine Schnitthöheneinstellungsvorrichtung 68 vorgesehen ist. Es wurde bereits darauf hingewiesen, dass bei einem Absenken des Mähwerksgehäuses 16 auf eine vorherbestimmte Schnitthöhe der Höheneinstellhebel 80 gegen das Stufenrad 76 zur Anlage kommt. In einem solchen Fall können der Höheneinstellhebel 80, die Welle 84 und die Ausleger 86 nicht mehr im Uhrzeigersinn mit Bezug auf Fig. 2 verschwenken und das Mähwerk ist gegen ein weiteres Absenken blockiert. Andererseits wird das Reibrad 38 dann immer noch von der unteren Riemenscheibe 30 angetrieben, so dass der Schiebeteil 54 sich weiter nach rückwärts verstellt. Dadurch können sich gegebenenfalls der Hebel 56, der Ausleger 60 und die Strebe 82 nach rückwärts verstellen, was dann infolge des in der Strebe vorgesehenen Langlochs 100 auch möglich ist, selbst wenn der Höheneinstellhebel 80 gegen das Stufenrad 76 anliegt. Das Langloch bewirkt damit eine Totgangverbindung. Der Schiebeteil 54 wird sich in der Regel auf der Spindel 40 solange verstellen, bis er gegen die erste Nockenfläche 96 zur Anlage kommt. Bei einem Kontakt des Schiebeteils mit der ersten Nockenfläche wird sich der Schiebeteil nach unten verstellen und dabei die schwenkbare Tragkonsole 42 mit dem Reibrad in die Neutralstellung nach Fig. 3 zurückstellen. Auf diese Weise erlaubt die Totgangverbindung der Bedienungsperson, dass sie eine Schnitthöhe vorwählen oder einstellen kann und dann ohne Rücksicht auf die Schnitthöhe den Handhebel 52 beliebig lang in der Position für Senken halten kann, weil die Hubvorrichtung automatisch in die Neutralstellung zurückkehrt. Ohne eine solche Funktion müsste die Bedienungsperson den Handhebel bei Erreichen der gewünschten Schnitthöhe loslassen.

Die vorbeschriebene Hubvorrichtung 10 wird damit letztlich vom Verbrennungsmotor 22 des Fahrzeuges aus angetrieben und kann von einer Bedienungsperson leicht betätigt werden, ohne dass sie große oder größere Muskelkräfte zum Anheben oder Absenken des Mähwerks, das bei mehreren Messern ein beträchtliches Gewicht hat, einsetzen müsste. Selbstverständlich sind auch keine Hydraulikzylinder oder komplexe Gestängevorrichtungen erforderlich, wodurch die Hubvorrichtung erheblich verteuert würde.

Selbstverständlich kann das Grundkonzept der vorliegenden Erfindung auch in einem Reibradgetriebe zum Antreiben eines Gerätes oder der Treibräder eines Fahrzeuges Anwendung finden. Anstatt zum Anheben oder Absenken eines Mähwerksgehäuses könnte die Gewindespindel als getriebener Teil 40 an eine Antriebswelle angeschlossen sein, die zum Antrieb der Räder eines von Hand geführten Rasenmähers, einer Schneeschleuder oder einer Kehrmaschine dient. Das einfache Verschwenken des Reibrades zwischen seiner oberen und unteren Stellung würde dann in einer Drehrichtung für Vorwärtsfahrt und in einer Drehrichtung für Rückwärtsfahrt resultieren. Die Mittenstellung des Reibrades würde einer Neutralstellung entsprechen.

Im Rahmen der Erfindung muss das Reibradgetriebe natürlich keine Riemenscheiben aufweisen. Reibscheiben würden genügen, die dann entsprechend dimensioniert sein sollten. Bei dem bevorzugten Ausführungsbeispiel ist die Reibscheibe 89 deshalb vorgesehen, weil der Außendurchmesser der oberen Riemenscheibe relativ klein ist.

Bei einem Einsatz des Reibradgetriebeprinzips in einer Hubvorrichtung ist das automatische Rückführen in die Neutralstellung nicht zwingend erforderlich. Entsprechendes gilt auch für die Schnitthöheneinstellvorrichtung. Diese Maßnahmen sind aber sinnvoll und erleichtern die Handhabung erheblich.

## Patentansprüche

1. Reibradantrieb mit einer von einer Kraftquelle aus antreibbaren Welle (26), einer ersten mit der Welle (26) drehfest verbundenen Reibscheibe (89) und einem Reibrad (38) mit einem Abtriebsteil, wobei auf der antreibbaren Welle (26) mit Abstand zur ersten Reibscheibe eine zweite Reibscheibe vorgesehen ist und wobei das Reibrad (38) zwischen drei Stellungen derart verschwenkbar ist, dass das Reibrad (38) in der ersten Stellung gegen die erste Reibscheibe (89) anliegt und in einer ersten Drehrichtung antreibbar ist, dass das Reibrad (38) in der zweiten Stellung gegen die zweite Reibscheibe anliegt und in einer zweiten der ersten Drehrichtung entgegengesetzten Drehrichtung antreibbar ist und dass das Reibrad (38) in der dritten Stellung zu der ersten und zweiten Reibscheibe einen Abstand aufweist und nicht antreibbar ist, dadurch gekennzeichnet, dass mindestens eine Reibscheibe als Riemenscheibe (30) ausgebildet ist.

2. Reibradantrieb mit einem von einer Kraftquelle aus antreibbaren Reibrad (38) und einer mit einem Abtriebsteil drehfest verbundenen ersten Reibscheibe (89), wobei auf dem Abtriebsteil mit Abstand zu der ersten Reibscheibe (89) eine zweite Reibscheibe vorgesehen ist und wobei das Reibrad (38) zwischen drei Stellungen derart verschwenkbar bzw. der Abtriebsteil derart verstellbar ist, dass die erste Reibscheibe (89) in der ersten Stellung gegen das Reibrad (38) anliegt und in einer ersten Drehrichtung antreibbar ist, dass die zweite Reibscheibe in der zweiten Stellung gegen das Reibrad (38) anliegt und in einer zweiten der ersten Drehrichtung entgegengesetzten Drehrichtung antreibbar ist und dass die erste und die zweite Reibscheibe in der dritten Stellung zu dem Reibrad (38) einen Abstand aufweisen und nicht antreibbar sind, dadurch gekennzeichnet, dass mindestens eine Reibscheibe als Riemenscheibe (30) ausgebildet ist.

3. Reibradantrieb nach Anspruch 1 oder Anspruch 2, dadurch gekennzeichnet, dass als Kraftquelle ein auf einem Fahrzeug (12) vorgesehener Verbrennungsmotor (22) dient

4. Reibradantrieb nach einem oder mehreren der vorherigen Ansprüche, dadurch gekennzeichnet, dass sein Abtriebsteil an eine Hubvorrichtung (10) zum Anheben und Absenken eines Gerätes in Abhängigkeit von der Drehrichtung des Reibradantriebes angeschlossen ist.

5. Reibradantrieb nach Anspruch 4, dadurch gekennzeichnet, dass die antreibbare Welle (26) zum Antrieb der Treibräder (20) eines Fahrzeuges (12) und zum Antrieb der Werkzeuge des Gerätes dient, wobei das Gerät an das Fahrzeug (12) höhenverstellbar angeschlossen ist.

6. Reibradantrieb nach Anspruch 5, dadurch gekennzeichnet, daß die Treibräder (20) und/oder die Werkzeuge des Geräts mit der Riemenscheibe über einen Riemen verbindbar sind.

7. Reibradantrieb mit Richtungswechsel nach einem oder mehreren der vorherigen Ansprüche, dadurch gekennzeichnet, dass der Abtriebsteil mit einem Schiebeteil (54) zusammenwirkt, der die Drehbewegung des Abtriebsteils in eine in Richtung der Längsachse des Abtriebsteils verlaufende Schiebebewegung umwandelt und bei seiner Verstellung ein Hubgestänge zumindest zum Anheben des Gerätes betätigt.

8. Reibradantrieb nach Anspruch 7, dadurch gekennzeichnet, dass der Abtriebsteil als eine mit dem Reibrad (38) verbundene Gewindestange (40) ausgebildet ist und dass der Schiebeteil (54) auf dem Gewinde der Gewindestange (40) undrehbar geführt ist, wobei die Gewindestange (40) zusammen mit dem Reibrad (38) schwenkbar gelagert ist und der Schiebeteil (54) mit einem Schwenkhebel (56) zusammenwirkt, der mit dem Hubgestänge verbunden ist.

9. Reibradantrieb nach Anspruch 8, dadurch gekennzeichnet, dass die Gewindestange (40) und der Schwenkhebel (56) in einem ortsfesten Stützträger (46) vertikal schwenkbar gelagert sind, der mindestens eine Nockenfläche (96 bzw. 98) zum automatischen Rückführen des Reibrades (38) in seine Neutralstellung aufweist

10. Reibradantrieb nach einem oder mehreren der vorherigen Ansprüche, dadurch gekennzeichnet, dass er zum Höhenverstellen eines an einem Rasentraktor angeschlossenen Mähwerks dient, wobei die antreibbare Welle (26) des Reibradantriebs zum Antrieb zumindest der Messer oder des Messers des Mähwerkes dient und wobei das Reibrad (38) vom Fahrerstand (50) aus manuell verstellbar ist.

11. Reibradantrieb nach einem oder mehreren der Ansprüche 4 bis 10, dadurch gekennzeichnet, daß die Hubvorrichtung (10) mit einer Höheneinstellvorrichtung (68) zusammenwirken kann.

12. Reibradantrieb nach Anspruch 11, dadurch gekennzeichnet, daß die Höheneinstellvorrichtung (68) ein Stufenrad (76) aufweist, das mit einem mit dem Gerät bzw. der Hubvorrichtung (10) zusammenwirkenden Höheneinstellhebel (80) derart zusammenwirken kann, daß der Höheneinstellhebel (80) an vorgebbare Stufen (78) des Stufenrades zur Anlage kommen kann.

## Claims

1. A friction wheel drive with a shaft (26) drivable from a power source, a first friction disc (89) rotationally fast with the shaft (26) and a friction wheel (38) with a driven part, wherein a second friction disc is provided on the drivable shaft (26), spaced from the first friction disc and wherein the friction wheel (38) can be so swung between three positions that the friction wheel (38) bears against the first friction disc (89) in the first position and can be driven in a first second direction of rotation, that the friction wheel (38) bears against the second friction disc in the second position and can be driven in a second direction of rotation opposite to the first direction of rotation and that the friction wheel (38) is spaced from the first and second friction discs in the third position and cannot be driven, characterized in that at least one friction disc is in the form of a pulley (30).

2. A friction wheel drive with a friction wheel (38) which can be driven from a power source and a first friction disc (89) rotationally fast with a driven part, wherein a second friction disc is provided on the driven part, spaced from the first friction disc (89) and wherein the friction wheel (38) can be so swung between three positions or the driven part can be so adjusted that the first friction disc (89) bears against the friction wheel (38) in the first position and can be driven in a first direction of rotation, that the second friction disc bears against the friction wheel (38) in the second position and can be driven in a second direction of rotation opposite to the first direction of rotation and that the first and second friction discs are spaced from the friction wheel (38) in the third position and cannot be driven, characterized in that at least one friction disc is in the form of a pulley (30).

3. A friction wheel drive according to claim 1 or 2, characterized in that an internal combustion engine (22) provided on a vehicle (12) serves as the power source.

4. A friction wheel drive according to one or more of the preceding claims, characterized in that its driven part is connected to a lift arrangement (10) for raising and lowering an implement in dependence on the direction of rotation of the friction wheel drive.

5. A friction wheel drive according to claim 4, characterized in that the drivable shaft (26) serves to drive the driving wheels (20) of a vehicle (12) and to drive the tools of the implement, wherein the implement is attached to the vehicle (12) so as to be adjustable in height.

6. A friction wheel drive according to claim 5, characterized in that the driving wheels (20) and/or the tools of the implement can be connected to the pulley by a belt.

7. A friction wheel drive with change of direction according to one or more of the preceding claims, characterized in that the driven part cooperates with a sliding part (54) which converts the rotary movement of the driven part into sliding movement in the direction of the longitudinal axis of the driven part and actuates a lift link by its movement at least to raise the implement.

8. A friction wheel drive according to claim 7, characterized in that the driven part is in the form of a threaded rod (40) connected to the friction wheel (38) and in that the sliding part (54) is guided non-rotatably on the thread of the threaded rod (40), wherein the threaded rod (40) together with the friction wheel (38) is pivotally mounted and the sliding part (54) cooperates with a pivoted lever (56) which is connected to the lift link.

9. A friction wheel drive according to claim 8, characterized in that the threaded rod (40) and the pivoted lever (56) are mounted to pivot vertically in a positionally fixed support (46), which has at least one cam surface (96 or 98) for automatic return of the friction wheel (38) into its neutral position.

10. A friction wheel drive according to one or more of the preceding claims, characterized in that it serves for the height adjustment of a mower mechanism attached to a lawn tractor, wherein the drivable shaft (26) of the friction wheel drive serves to drive at least the blades or blade of the mower mechanism and wherein the friction wheel (38) is manually adjustable from the driver's platform (50).

11. A friction wheel drive according to one or more of claims 4 to 10, characterized in that the lift arrangement (10) can cooperate with a height setting device (68).

12. A friction wheel drive according to claim 11, characterized in that the height setting device (68) comprises a stepped wheel (76), which can so cooperate with a height setting lever (80) cooperating with the implement or the lift arrangement (10) that the height setting lever (80) can come into abutment with predetermined steps (78) of the stepped wheel.

## Revendications

1. Dispositif d'entraînement à roue de friction comportant un arbre (26) pouvant être entraîné à partir d'une source de force, un premier disque de friction (89) relié de manière à être bloqué en rotation à l'arbre (26), et une roue de friction (38) comportant une partie menée, et dans lequel un second disque de friction est prévu à distance du premier disque de friction sur l'arbre (26) pouvant être entraîné et dans lequel la roue de friction (38) peut basculer entre trois positions de telle sorte que dans la première position, la roue de friction (38) s'applique contre le premier disque de friction (89) et peut être entraînée dans un premier sens de rotation, que dans la seconde position, la roue de friction (38) s'applique contre le second disque de friction et peut être entraînée dans un second sens de rotation opposé au premier sens de rotation, et que dans la troisième position, la roue de friction (38) est distante des premier et second disques de friction et ne peut pas être entraînée, caractérisé en ce qu'au moins un disque de friction est agencé sous la forme d'une poulie (30).

2. Dispositif d'entraînement à roue de friction comportant une roue de friction (38) pouvant être entraînée à partir d'une source de force, et un premier disque de friction. (89) relié avec blocage en rotation à une partie menée, et dans lequel un second disque de friction est prévu sur la partie menée à distance du premier disque de friction (89), et dans lequel la roue de friction (38) peut pivoter entre trois positions respectivement la partie menée est réglable, de telle sorte que dans la première position, le premier disque de friction (89) s'applique contre la roue de friction (38) et peut être entraîné dans un premier sens de rotation, que dans la seconde position, le second disque de friction s'applique contre la roue de friction (38) et peut être entraîné dans un second sens de rotation opposé au premier sens de rotation, et que dans la troisième position, les premier et second disques de friction sont situés à distance de la roue de friction (38) et ne peuvent pas être entraînés, caractérisé en ce qu'au moins un disque de friction est agencé sous la forme d'une poulie (30).

3. Dispositif d'entraînement à roue de friction selon la revendication 1 ou la revendication 2, caractérisé en ce qu'on utilise comme source de force, un moteur à combustion interne (22) prévu sur un véhicule (12).

4. Dispositif d'entraînement à roue de friction selon une ou plusieurs des revendication précédentes, caractérisé en ce que sa partie menée est raccordée à un dispositif de levage (10) servant à soulever et abaisser un appareil en fonction du sens de rotation du dispositif d'entraînement de la roue de friction.

5. Dispositif d'entraînement à roue de friction selon la revendication 4, caractérisé en ce que l'arbre pouvant être entraîné (26) sert à entraîner les roues motrices (20) d'un véhicule (12) et à entraîner les outils de l'appareil, l'appareil étant raccordé au véhicule (12) de manière à être réglable en hauteur.

6. Dispositif d'entraînement à roue de friction selon la revendication 5, caractérisé en ce que les roues motrices (20) et/ou les outils de l'appareil peuvent être reliés à la poulie par l'intermédiaire d'une courroie.

7. Dispositif d'entraînement à roue de friction avec changement de direction selon une ou plusieurs des revendications précédentes, caractérisé en ce que la partie menée coopère avec une partie coulissante (54), qui convertit le mouvement de rotation de la partie menée en un mouvement de translation qui s'étend dans la direction de l'axe longitudinal de la partie menée et, lors de son mouvement, actionne une tringlerie de levage au moins pour soulever l'appareil.

8. Dispositif d'entraînement à roue de friction selon la revendication 7, caractérisé en ce que la partie menée est agencée sous la forme d'une tige filetée (40), qui est reliée à la roue de friction (38) et que la partie coulissante (54) est guidée sans possibilité de rotation sur le filetage de la tige filetée (40), la tige filetée (40) étant montée de manière à pouvoir pivoter conjointement avec la roue de friction (38), et la partie coulissante (54) coopère avec un levier pivotant (56), qui est relié à la tringlerie de levage.

9. Dispositif d'entraînement à roue de friction selon la revendication 8, caractérisé en ce que la tige filetée (40) et le levier pivotant (56) sont montés de manière à pouvoir pivoter verticalement dans un support (46) stationnaire, qui possède au moins une surface de came (96 ou 98) servant à ramener automatiquement la roue de friction (38) dans sa position neutre.

10. Dispositif d'entraînement à roue de friction selon une ou plusieurs des revendications précédentes, caractérisé en ce qu'il est utilisé pour le réglage en hauteur d'une unité de coupe raccordée à un tracteur-tondeuse, l'arbre pouvant être entraîné (26) du dispositif d'entraînement à roue de friction servant à entraîner au moins le couteau ou les couteaux de l'unité de coupe, et la roue de friction (38) pouvant être actionnée manuellement à partir du siège (50) du conducteur.

11. Dispositif d'entraînement à roue de friction selon une ou plusieurs des revendications 4 à 10, caractérisé en ce que le dispositif de levage (10) peut coopérer avec un dispositif de réglage en hauteur (68).

12. Dispositif d'entraînement à roue de friction selon la revendication 11, caractérisé en ce que le dispositif de réglage en hauteur (68) comporte une roue étagée (76), qui peut coopérer avec un levier de réglage en hauteur (80), qui coopère avec l'appareil respectivement le dispositif de levage (10), de telle sorte que le levier de réglage en hauteur (80) peut s'appliquer sur des étages pouvant être prédéterminés (78) de la roue étagée.
